**Europäisches Patentamt**

**European Patent Office**

**Office européen des brevets**

(11) Veröffentlichungsnummer: **0 360 979**

**A2**

(12) ## EUROPÄISCHE PATENTANMELDUNG

(21) Anmeldenummer: **89109776.8**

(51) Int. Cl.5: **H04B 1/16**

(22) Anmeldetag: **30.05.89**

Die Bezeichnung der Erfindung wurde geändert (Richtlinien für die Prüfung im EPA, A-III, 7.3).

(30) Priorität: **18.06.88 DE 3820639**

(43) Veröffentlichungstag der Anmeldung:
**04.04.90 Patentblatt 90/14**

(84) Benannte Vertragsstaaten:
**DE FR GB IT**

(71) Anmelder: **ROBERT BOSCH GMBH**
**Postfach 10 60 50**
**D-7000 Stuttgart 10(DE)**

(72) Erfinder: **Duckeck, Ralf**
**Zierenbergstrasse 11**
**D-3200 Hildesheim(DE)**

(54) **Rundfunkempfänger zum Empfang digital codierter Verkehrsnachrichten mit einer stromsparenden Stand-by-Funktion.**

(57) Ein Rundfunkempfänger, insbesondere Fahrzeugempfänger ist mit einem Decoder zur Decodierung digital codiert empfangener Verkehrsnachrichten ausgerüstet. Er enthält einen Speicher, in dem die Verkehrsnachrichten abrufbereit gespeichert sind. Soll der Rundfunkempfänger stets die aktuellen Verkehrsnachrichten anzeigen können, müßte er ständig eingeschaltet bleiben, um jeweils die aktualisierten Verkehrsnachrichten in seinem Speicher übernehmen zu können. Bei einem Fahrzeugempfänger resultiert hieraus jedoch ein hoher Energiebedarf, der die Fahrzeug-Batterie übermäßig belastet.

Der Rundfunkempfänger nach der Erfindung ist mit einer Energie-Spar-Schaltung ausgestattet, die nur die für die Auswertung der Verkehrsnachrichten benötigten Bau gruppen mit der Betriebsspannungsquelle verbindet. Darüberhinaus kann vorgesehen sein, die größten Energieverbraucher dieser Baugruppen nur zeitweise einzuschalten und die vollständigen Zyklen der Verkehrsnachrichten nur dann auszuwerten, wenn die vorherige Auswertung eines Aktualisierungs-Bits ergeben hat, daß Änderungen vorliegen.

FIG. 3

**Stromsparende Stand-by-Funktion in TMC-Empfängern**

Die Erfindung betrifft einen Rundfunkempfänger, insbesondere Fahrzeugempfänger, mit einem Decoder zur Decodierung digital codiert empfangener Verkehrsnachrichten nach dem Oberbegriff des Anspruchs 1. Verkehrsnachrichten, die nach Unterbrechung des laufenden Programms als Tonmodulation im Klartext gesendet werden, sind in der Regel an feste Zeiten gebunden oder werden bei besonders akuten Behinderungen in das Programm eingestreut. Bei diesem System kann der Autofahrer in der Regel nicht damit rechnen, daß er nach Fahrtantritt sofort eine Information über die Verkehrslage erhält.

Mit der Einführung des RDS-Systems besteht die Möglichkeit, zusätzlich zu der Tonmodulation eines FM-Rundfunk-Programms Daten zu übertragen. Dabei bietet es sich an, zusätzlich zu Angaben über den empfangenen Sender sowie den Inhalt des Programms Verkehrsnachrichten zu übermitteln. Da diese Verkehrsnachrichten als digitale Signale auf einen Hilfsträger moduliert ausgestrahlt werden, können sie ohne Unterbrechung der Tonmodulation des FM-Rundfunk-Programms ständig übertragen werden. Der Autofahrer wird dadurch also schon kurze Zeit nach Einschalten seines Rundfunkempfängers über die aktuelle Verkehrslage informiert.

Es kann jedoch bei Fahrtantritt von Vorteil sein, sofort einen Überblick über die Verkehrslage zu erhalten, um danach die zu benutzende Fahrtroute festzulegen. Hat nach dem Einschalten des Rundfunkempfängers gerade ein Übertragungszyklus von Verkehrsnachrichten begonnen, so muß der Autofahrer diesen und den folgenden abwarten bis er über seine Anzeige oder seinen Lautsprecher die gewünschten Informationen erhält.

Um diesen Nachteil zu vermeiden, könnte der Autofahrer seinen Rundfunkempfänger einfach in eingeschaltetem Zustand lassen und erhält nach Rückkehr zum Fahrzeug dann sofort die aktuelle Verkehrsinformation. Dies ist jedoch bei längerem, z.B. ein oder mehrere Tage dauernden Standzeiten unzweckmäßig, da der Fahrzeugbatterie unnötig elektrische Energie entzogen wird und die Restenergie dann nicht mehr zum Starten des Motors ausreichen könnte.

Der Erfindung liegt die Aufgabe zugrunde, einen Rundfunkempfänger mit den Merkmalen des Oberbegriffs des Anspruchs 1 dahingehend zu verbessern, daß auch bei wesentlich verringertem Energiebedarf die Anzeige von Verkehrsnachrichten aktuellen Standes unmittelbar nach dem Einschalten ermöglicht wird.

Diese Aufgabe wird bei einem Rundfunkempfänger nach dem Oberbegriff des Anspruchs 1 durch die im kennzeichnenden Teil angegebenen Merkmale gelöst.

Durch die Energie-Spar-Schaltung werden solche Baugruppen, die für die Verarbeitung des Datentelegramms zur Auswertung der Verkehrsnachrichten nicht benötigt werden, von der Betriebsspannungsquelle getrennt. Die übrigen Baugruppen arbeiten weiter, so daß der Speicher zur Speicherung der Verkehrsnachrichten mit den aktuellen Informationen versorgt wird.

Eine Weiterbildung sieht vor, daß der Energie-Spar-Schaltung ein Zeitschaltwerk zugeordnet ist, durch welches wenigstens die größten Energieverbrauche der zum Empfang, zur Decodierung, Auswertung und zur Speicherung der Verkehrsnachrichten benötigten Baugruppen, vorzugsweise der HF-Teil, nur zu vorgegebenen Zeiten oder nach vorgegebenen Zeitintervallen mit der Betriebsspannungsquelle verbunden sind.

Durch diese Maßnahme läßt sich der Energieverbrauch noch weiter reduzieren, wenn diejenigen Baugruppen, z.B. der HF-Teil, die von den verbleibenden Baugruppen den höchsten Energiebedarf haben, nur noch mit einer Anschaltquote zwischen 5 und 20% betrieben werden. Dabei könnte zwar ein Teil der im Speicher vorhandenen und bei Einschalten des Rundfunkempfängers angezeigten Verkehrsnachrichten zeitlich überholt sein, dieser Fall ist aber relativ selten, da die Verkehrsnachrichten in der Regel mehrere Zyklen unverändert ausgestrahlt werden, bis eine Veränderung eintritt.

Werden die Zeitintervalle etwa so bemessen, daß sie einen durchschnittlichen Übertragungszyklus von Verkehrsnachrichten entsprechen, dann ergibt sich bei der Aktualisierung der im Speicher befindlichen Verkehrs nachrichten eine mögliche Verzögerung in der Aktualisierung von ein bis zwei Zyklen. Dieser Zustand ist angesichts des weiteren Energie-Spar-Potentials, das auf diese Weise erzielt wird, voll vertretbar.

Weiterbildungen und vorteilhafte Ausgestaltungen der Erfindung ergeben sich aus den weiteren Ansprüchen, der Beschreibung und der Zeichnung, die ein Ausführungsbeispiel der Erfindung veranschaulicht.

In der Zeichnung zeigen:

Fig. 1 ein Blockschaltbild eines Rundfunkempfängers nach der Erfindung,

Fig. 2 als graphische Darstellung einen Ausschnitt aus dem RDS-Datentelegramm und

Fig. 3 ein Flußdiagramm eines Programmablaufs, wie es als Steuerprogramm im Programmspeicher des Rechners gespeichert ist.

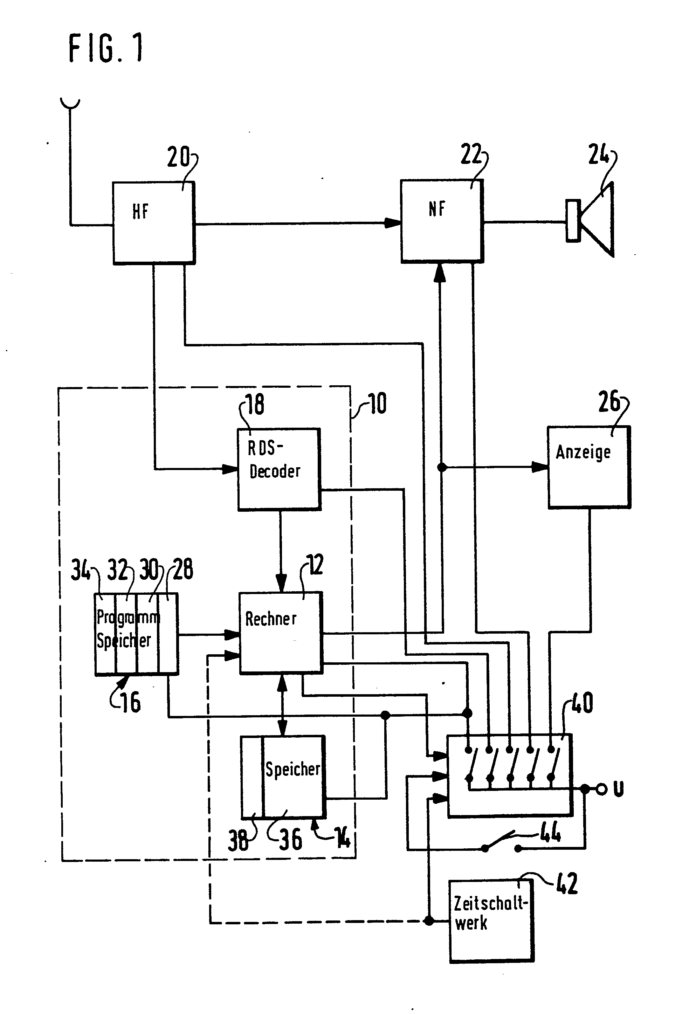

Das in Fig. 1 dargestellte Blockschaltbild eines Rundfunkempfängers umfaßt einen HF-Teil 20, einen NF-Teil 22, einen Lautsprecher 24, einen Decoder 10, eine Anzeigevorrichtung 26, eine Energiesparschaltung 40, ein Zeitschaltwerk 42 sowie einen Hauptschalter 44.

Von der Antenne einfallende Signale werden im HF-Teil 20 demoduliert, wobei die Tonmodulation im Rundfunkwiedergabebetrieb dem NF-Teil 22 zugeführt und über den Lautsprecher 24 wiedergegeben wird. Der mitausgestrahlte und im HF-Teil 20 demodulierte Hilfsträger wird einem im Decoder 10 vorhandenen RDS-Decoder 18 zugeführt, der das RDS-Datentelegramm decodiert. Innerhalb des Datentelegramms befindet sich ein Verkehrsnachrichten enthaltender Teil , TMC (Trafic-Massage-Channel) bezeichnet.

Dieser wird von einem Rechner 12 ausgewertet, wobei der Rechner 12 durch ein in Speicherplätzen 28 des Programmspeichers 16 gespeichertes Steuerprogramm gesteuert wird. Die ausgewerteten Verkehrsnachrichten gelangen zu Speicherplätzen 14 eines Speichers 36. Der Rechner 12 ist in der Lage, aus den decodierten Datenworten standardisierte Verkehrsnachrichten zu bilden, die dem NF-Teil 22 und der Anzeigevorrichtung 26 zugeführt werden und über den Lautsprecher 24 als synthetische Sprache und/oder über die Anzeigevorrichtung 26 in alphanumerischer Darstellung wiedergegeben werden.

Im Programmspeicher 16 befinden sich weitere Speicherplätze 30, 32 und 34, in denen weitere Steuerprogramme gespeichert sind. Diese können alternativ oder zusätzlich den Rechner 12 steuern. Der Speicher 14 enthält neben den Speicherplätzen für die Inhalte der Verkehrsnachrichten zusätzlich einen Speicherplatz 38, in dem ein im Datentelegramm vorhandenes Aktualisierungs-Bit nach seiner Auswertung gespeichert wird.

Weiterhin ist eine Energie-Spar-Schaltung 40 vorgesehen, deren Eingangsanschluß mit einer Spannungsquelle U und deren Ausgangsanschlüsse mit den Spannungsversorgungseingängen der Baugruppen des Rundfunkempfängers verbunden sind. Die Energie-Spar-Schaltung 40 besitzt mehrere Steuereingänge, über die verschiedene Schalter, welche die einzelnen Baugruppen mit der Betriebsspannungsquelle verbinden oder von dieser trennen können, steuerbar sind.

Es handelt sich dabei um einen ersten Steuereingang, der über einen Hauptschalter 44 mit der Betriebsspannungs quelle U verbunden ist, um einen zweiten Steuereingang, der mit dem Rechner 12 verbunden ist und um einen dritten Steuereingang, der mit einem Zeit-Schalt-Werk 42 verbunden ist. Das Zeit-Schalt-Werk 42 ist zusätzlich oder alternativ mit dem Rechner 12 verbunden, wie eine gestrichelte Verbindungslinie veranschaulicht.

Die Energie-Spar-Schaltung 40 kann je nach den Anforderungen an das Einsparpotential mit einem oder mehreren getrennt steuerbaren Schaltern zur Steuerung der angeschlossenen Stromkreise versehen sein. Im einfachsten Fall reicht ein Schalter aus, mit dem bei Betätigen des Hauptschalters 44 des Rundfunkempfängers z.B. der NF-Teil 22 und die Anzeige 26 von der Betriebsspannungsquelle U getrennt werden, während die übrigen Baugruppen weiterhin mit der Betriebsspannungsquelle U verbunden bleiben.

In einer weiteren Ausbaustufe kann ein Schalter vorgesehen sein, der zusätzlich den HF-Teil 20 in oder außer Betrieb setzt. Dieser Schalter wird zweckmäßig durch das Zeit-Schalt-Werk 42 gesteuert, wobei der HF-Teil 20 jeweils nur für kurze Zeit in Betrieb gesetzt wird, um einen Sender, der ein Datentelegramm mit ausstrahlt, zu empfangen, um anschließend wieder außer Betrieb gesetzt zu werden. Da der HF-Teil hochwertiger Rundfunkempfänger bei einer Betriebsspannung von 12 Volt eine Stromaufnahme von 150 - 200 mA hat, läßt sich durch Verringerung der Einschaltquote, z.B. auf etwa 20% eine erhebliche Energieeinsparung erzielen und bei Anwendung im Fahrzeug die Startbereitschaft der Batterie auf die 5-fach Zeit im Vergleich zum ständig eingeschalteten HF-Teil erweitern.

Eine noch größere Energieeinsparung ist möglich, wenn nach der Auswertung eines vollständigen Zyklus von Verkehrsnachrichten zunächst geprüft wird, ob sich die Verkehrsnachrichten geändert haben oder nicht. Dies kann dadurch erfolgen, daß durch das Zeitschaltwerk 42 ein, z.B. auf den Speicherplätzen 28 des Programmspeichers 16 gespeicherte Steuerprogramm aufgerufen wird.

Mittels dieses Steuerprogramms wird der Rechner 12 derart gesteuert, daß nach einem erstmalig vollständigen Zyklus von Verkehrsnachrichten bei jedem weiteren Aufruf des Steuerprogramms ein im Datentelegramm vorhandenes, jeweils bei Änderung der Verkehrsnachrichten geändertes Aktualisierungs-Bit identifiziert wird. Dieses wird ausgewertet und gespeichert und mit dem vorangehenden Aktualisierungs-Bit verglichen. Nur bei geändertem Aktualisierungs-Bit wird dann wenigstens ein weiterer vollständiger Zyklus von Verkehrsnachrichten decodiert und der Speicherinhalt mit diesen geänderten Verkehrsnachrichten überschrieben.

Im anderen Falle wird durch ein auf den Speicherplätzen 30 des Programmspeichers 16 enthaltenes zweites Steuerprogramm die Energie-Spar-Schaltung 40 durch den Rechner 12 veranlaßt, die größten Energieverbraucher der für die Verarbeitung der Verkehrsnachrichten benötigten Baugruppen unmittelbar von der Betriebsspannungsquelle U zu trennen.

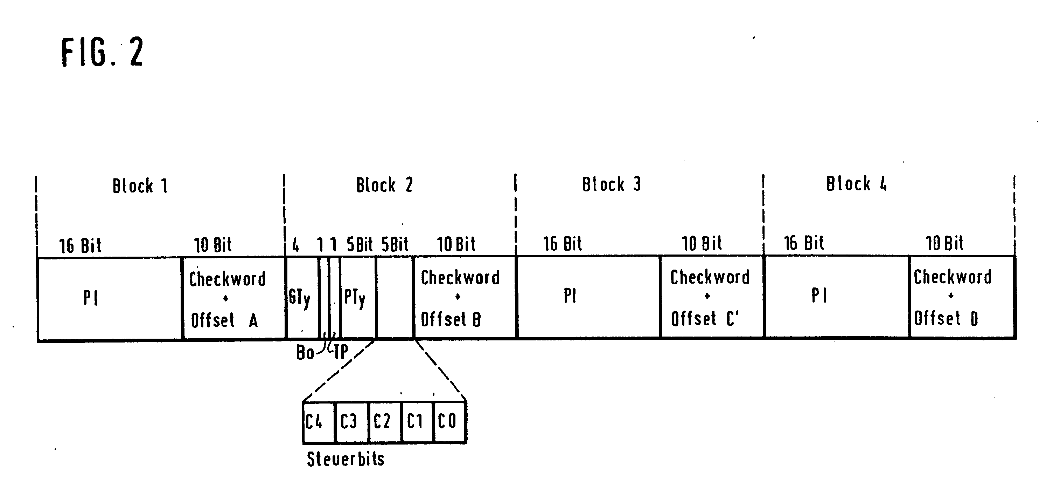

Zur Erläuterung des vom RDS-Decoder 18 decodierten Datentelegramms, in dem auch das bereits erwähnte Aktualisierungs-Bit enthalten ist, wird auf Fig. 2 Bezug genommen. Dort sind jeweils vier Blöcke einer RDS-Gruppe schematisch dargestellt. Jeder Block umfaßt 26 Bit, von denen die ersten 16 Bit Daten enthalten und die letzten 10 Bit ein Checkword zur Fehlererkennung und einen Offset als Synchronwort enthalten.

Von den in Block zwei vorhandenen ersten 16 Bit für Datenworte sind die ersten 4 Bit als Gruppencode GTy, das nächste Bit Bo als Offsetcode, das nächste Bit als Ari-Kennzeichnungsbit TP und weitere folgende 5 Bit als Programmtyp PTy reserviert. Bis zu den letzten 10 Bit dieses Blockes 2 sind somit noch 5 Steuerbits $C4$, $C3$, $C2$, $C1$ und $C0$ übrig. Von diesen Steuerbits kann eines als Aktualisierungs-Bit verwendet werden, wobei dies vorzugsweise das Bit $C1$ ist.

In Block 3 wird wiederum eine Programmidentifikation übertragen und in Block 4 sind Datenworte enthalten, die entweder die Anzahl oder den Inhalt der Verkehrsnachrichten wiedergeben. Die Entscheidung, ob die Anzahl oder der Inhalt von Verkehrsnachrichten übertragen wird, hängt von dem Bit Bo in Block 2 ab. Hat dieses den Zustand 1, wird im Block 3 das Offsetbit zu $C'$. Dies hat die Bedeutung, daß in Block 4 die Anzahl der Verkehrsnachrichten übertragen wird.

Hat dagegen in Block 2 das Offsetbit Bo den Wert Null, so wird daraufhin das Offsetbit in Block 3 zu C. Dies hat die Bedeutung, daß der Inhalt von Verkehrsnachrichten in Block 4 übertragen wird.

Das aus dem Datentelegramm der RDS-Gruppe ableitbare Kriterium, wie hoch die Anzahl der Verkehrsnachrichten ist, ermöglicht, daß Ende eines Zyklus festzulegen und nach der Übertragung eines vollständigen Zyklus die Stromsparschaltung 40 durch den Rechner 12 zu veranlassen, die entsprechenden Baugruppen von der Betriebsspannungsquelle U zu trennen.

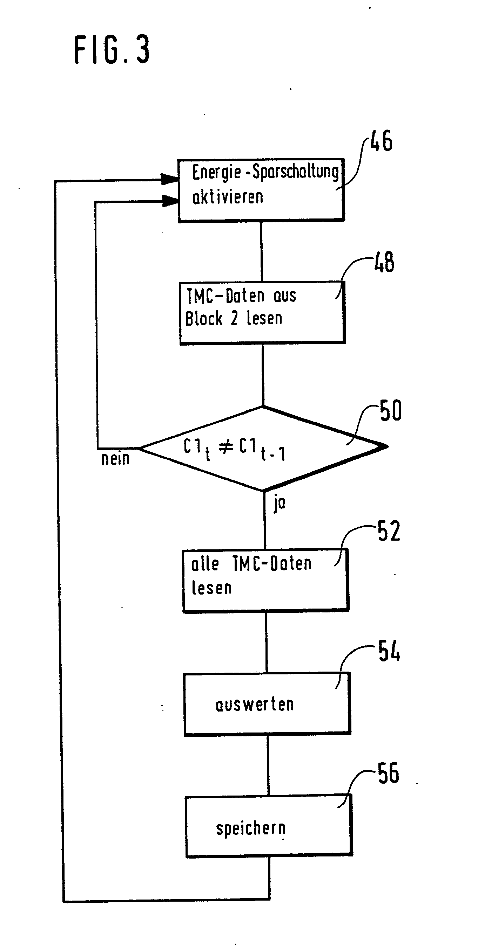

Fig. 3 zeigt ein Flußdiagramm der in den Speicherplätzen 28 und 30 des Programmspeichers 16 gespeicherten Steuerprogramme, die im Flußdiagramm zu einem Gemeinsamen zusammengefaßt sind. Das Flußdiagramm beginnt bei 46 mit einem Verfahrensschritt, in dem die Energie-Spar-Schaltung 40 die Baugruppen mit dem größten Energiebedarf von der Betriebsspannungsquelle U getrennt hat. Im nächsten mit 40 bezeichneten Verfahrensschritt werden die für Verkehrsnachrichten relevanten Daten in Block 2 gelesen.

In diesem Verfahrensschritt wird das Aktualisierungs-Bit $C1$ sowie der Offsetcode B0 identifiziert. Im nächsten, mit 50 bezeichneten Verfahrensschritt wird das gelesene Aktualisierungs-Bit $C1_t$ mit dem vorher gespeicherten Aktualisierungs-Bit $C1_{t-1}$ verglichen. Ergibt der Vergleich Ungleicheit, werden im nächsten Verfahrensschritt, der mit 52 bezeichnet ist, alle Verkehrsnachrichten betreffenden Daten gelesen. Die gelesenen Daten werden dann in dem mit 54 bezeichneten Verfahrensschritt ausgewertet und in dem mit 56 bezeichneten Verfahrensschritt gespeichert.

Nach dem Speichern erfolgt ein Rücksprung zum Verfahrensschritt 46. Im einfachsten Fall werden nur während des Verfahrensschrittes 46 die viel Energie verbrauchenden Baugruppen von der Betriebsspannungsquelle getrennt. In den weiteren Verfahrensschritten 48 - 56 sind sie dagegen, außer dem NF-Teil 22 und der Anzeige 26, mit der Betriebsspannungsquelle U verbunden.

Nachdem während des ersten Durchlaufs des Programms Verkehrsnachrichten gespeichert wurden, soll beim nächsten Durchlauf angenommen werden, daß wieder derselbe Zyklus mit Verkehrsnachrichten ausgestrahlt wird. Nachdem in dem Verfahrensschritt 48 wieder die Verkehrsnachrichten enthaltenden Daten aus Block 2 gelesen wurden, führt der im Verfahrensschritt 50 vorgenommene Verglich zwischen dem aktuellen Aktualisierungs-Bit $C1_t$ und dem zuvor gespeicherten Aktualisierungs-Bit $C1_{t-1}$ zu dem Ergebnis, daß keine Un gleichheit besteht, die Entscheidung also nein ist. In diesem Fall wird wieder zum Verfahrensschritt 46 zurückgekehrt so daß die zeitaufwendigeren Verfahrensschritte 52 - 56 eingespart werden.

Da das Aktualisierungs-Bit nur ein Bit umfaßt, während die Verkehrsnachrichten nach Übertragung der Anzahl und des Inhalts gegebenenfalls mehrere RDS-Gruppen für die Übertragung in Anspruch nehmen, ist ersichtlich, daß durch die in dem beschriebenen Programmablauf vorgesehene Maßnahme eine weitere erhebliche Anschaltquote der einen hohen Energiebedarf aufweisenden Baugruppen erzielt werden kann.

Da das Datentelegramm bei schwierigen Übertragungsbedingungen mit Fehlern behaftet sein wird, kann es erforderlich sein, zur Gewinnung einwandfreier Verkehrsnachrichten fehlerkorrigierende Maßnahmen anzuwenden. In diesem Fall sieht ein drittes Steuerprogramm vor, daß z.B. nach dem mit 54 bezeichneten Verfahrensschritt wieder zum mit 52 bezeichneten Verfahrensschritt zurückgesprungen wird um weitere vollständige Zyklen der Verkehrsnachrichten zu decodieren und auszuwerten, bis fehlerfreie Verkehrsnachrichten vorliegen. Danach wird zum mit 56 bezeichneten Verfahrensschritt übergegangen und der weitere Ablauf erfolgt wie im Zusammen hang mit Fig. 3 vorbeschrieben.

Eine Möglichkeit, bei der gegenüber der vorerwähnten Methode der HF-Teil 20 und der RDS-Decoder 18 nur während eines Zyklus eingeschaltet sein muß, sieht ein viertes Steuerprogramm vor. Hierbei wird nach dem Lesen eines vollständigen Zyklus von Verkehrsnachrichten die Energie-Spar-Schaltung veranlaßt, die größten Energieverbraucher, also den HF-Teil 20 und eventuell die zur Decodierung benötigten Baugruppen 18 von der Betriebsspannungsquelle U zu trennen. Anschließend werden die gelesenen Daten fehlerkorregierenden Maßnahmen unterworfen bis im günstigen Fall einwandfreie Verkehrsnachrichten vorliegen, die dann im Verfahrensschritt 56 gespeichert werden.

Bei dem Rücksprung zum Verfahrensschritt 46 lassen sich dann gegebenenfalls noch weitere Baugruppen abschalten, um so den Energieverbrauch noch weiter zu reduzieren, bis durch das Zeit-Schalt-Werk der beschriebene Verfahrensablauf erneut mit dem Verfahrensschritt 48 in Betrieb gesetzt wird.

Wird das Zeit-Schalt-Werk 42 so bemessen, daß etwa jede Minute die zum Empfang der Verkehrsnachrichten erforder lichen Baugruppen eingeschaltet werden, so ergibt sich bei einer voraussichtlichen Einschaltdauer von bei ungünstigen Empfangsverhältnissen etwa 5 Sekunden eine Reduktion des Energieverbrauchs auf weniger als 10%. Bei einem Einsatz des Rundfunkempfängers im Fahrzeug wird so die Startreserve der Fahrzeugbatterie erhalten, die so wegen Vorbeugung vor Tiefentladungen geschont und auch im übrigen die Lebensdauer der einzelnen elektronischen Baugruppen erhöht.

## Ansprüche

1. Rundfunkempfänger, insbesondere Fahrzeugempfänger, mit einem Decoder (10) zur Decodierung digital codiert empfangener Verkehrsnachrichten, insbesondere solcher, die nach dem RDS-System übertragen sind, einem Rechner (12) zur Auswertung eines Datentelegramms und einem Speicher (14) zur Speicherung der Verkehrsnachrichten, dadurch gekennzeichnet, daß der Rundfunkempfänger eine Energie-Spar-Schaltung (40) umfaßt, mittels der bei abgeschalteter Tonwiedergabe nur die zum Empfang (20), zur Decodierung (18), Auswertung (12, 16) und zur Speicherung (14) der Verkehrsnachrichten benötigten Baugruppen mit einer Be triebsspannungsquelle (U) verbunden sind.

2. Rundfunkempfänger nach Anspruch 1, dadurch gekennzeichnet, daß der Energie-Spar-Schaltung (40) ein Zeit-Schalt-Werk (42) zugeordnet ist, durch welches wenigstens die größten Energieverbrauche der zum Empfang, zur Decodierung, Auswertung und zur Speicherung der Verkehrsnachrichten benötigten Baugruppen, vorzugsweise der HF-Teil (20), nur zu vorgegebenen Zeiten oder nach vorgegebenen Zeitintervallen mit der Betriebsspannungsquelle (U) verbunden sind.

3. Rundfunkempfänger nach Anspruch 2, dadurch gekennzeichnet, daß durch das Zeitschaltwerk (42) ein in einem Programmspeicher (16) gespeichertes Steuerprogramm aufgerufen wird, mittels dem der Rechner (12) derart gesteuert ist, daß nachdem erstmalig ein vollständiger Zyklus von Verkehrsnachrichten decodiert, gegebenenfalls fehlerkorregiert in den Speicher eingeschrieben wurde, bei jedem weiteren Aufruf des Steuerprogramms ein im Datentelegramm vorhandenes, jeweils bei Änderung der Verkehrsnachrichten geändertes Aktualisierungs-Bit identifiziert, ausgewertet und gespeichert wird, und daß nur bei geändertem Aktualisierungs-Bit wenigstens ein weiterer vollständiger Zyklus von Verkehrsnachrichten decodiert und der Speicherinhalt mit diesen geänderten Verkehrsnachrichten überschrieben wird.

4. Rundfunkempfänger nach Anspruch 3, dadurch gekennzeichnet, daß in dem Programmspeicher (16) ein zweites Steuerprogramm vorhanden ist, mittels den bei nichtgeändertem Aktualisierungs-Bit die Energie-Spar-Schaltung (40) veranlaßt wird, die größten Energieverbraucher der zum Empfang (20), zur Decodierung (18), Auswertung (12, 16) und zur Speicherung (14) benötigten Baugruppen unmittelbar von der Betriebsspannungsquelle (U) zu trennen.

5. Rundfunkempfänger nach Anspruch 3 oder 4, dadurch gekennzeichnet, daß in dem Programmspeicher (16) ein drittes Steuerprogramm vorhanden ist, mittels dem bei geändertem Aktualisierungs-Bit so lange weitere vollständige Zyklen von Verkehrsnachrichten decodiert und ausgewertet werden, bis fehlerfreie Verkehrsnachrichten erhalten werden, daß der Speicherinhalt dann mit diesen geänderten Verkehrsnachrichten überschrieben wird und daß anschließend die Energie-Spar-Schaltung 40) veranlaßt wird, die größten Energieverbraucher der zum Empfang (20), zur Decodierung (18), Auswertung (12, 16) und zur Speicherung (14) benötigten Baugruppen von der Betriebsspannungsquelle (U) zu trennen.

6. Rundfunkempfänger nach Anspruch 2 oder 3, dadurch gekennzeichnet, daß in dem Programmspeicher ein viertes Steuerprogramm vorhanden ist, mittels dem bei geändertem Aktualisierungs-Bit ein vollständiger Zyklus von Verkehrsnachrichten decodiert und gelesen wird, daß anschließend die Energie-Spar-Schaltung (40) veranlaßt wird, die größten Energieverbraucher der zum Empfang (20) und zur Decodierung (18) benötigten Baugruppen von der Versorgungsspannungsquelle zu trennen, daß die Verkehrsnachrichten dann ausgewertet und gegebenenfalls fehlerkorrigiert werden, daß der Speicherinhalt mit diesen geänderten Verkehrsnachrichten überschrieben wird und daß schließlich die Energie-Spar-Schaltung (40) veranlaßt wird, gegebenenfalls die restlichen größeren Energieverbraucher der zur Auswertung (12, 16) und Speicherung (14) benötigten Baugruppen von der Betriebsspannungsquelle (U) zu trennen.

7. Rundfunkempfänger nach einem oder mehreren der Ansprüche 3 - 6, dadurch gekennzeichnet, daß die im Programmspeicher (16) gespeicherten Steuerprogramme den Rechner (12) veranlassen, für die Identifizierung eines Aktualisierungs-Bits ein im Block zwei der TMC-RDS-Gruppe im Datentelegramm vorhandenes Steuer-Bit (C4 - C0) auszuwerten.

8. Rundfunkempfänger nach einem oder mehreren der Ansprüche 2 - 7, dadurch gekennzeichnet, daß das Zeitschaltwerk (42) auf ein Zeitintervall von etwa einer Minute eingestellt ist.

21 921

FIG. 1

EP 0 360 979 A2

FIG. 2

Block 1

16 Bit — PI

Block 2 — 10 Bit — Checkword + Offset A

4 — GTy — 1 1 — 5Bit — PTy — 5Bit — 10 Bit — Checkword + Offset B

Bo — CTP

C4 | C3 C2 | C1 C0

Steuerbits

Block 3 — 16 Bit — PI — 10 Bit — Checkword + Offset C'

Block 4 — 16 Bit — PI — 10 Bit — Checkword + Offset D

15.6.88 Ga

# FIG.3

```
                            ┌─────────────────────┐  ╭─46
                       ┌───►│ Energie-Sparschaltung│
                       │ ┌─►│ aktivieren           │
                       │ │  └─────────────────────┘
                       │ │           │
                       │ │  ┌─────────────────────┐  ╭─48
                       │ │  │ TMC-Daten aus        │
                       │ │  │ Block 2 lesen        │
                       │ │  └─────────────────────┘
                       │ │           │
                       │ │        ◇ C1_t ≠ C1_{t-1}  ╭─50
                       │ └──nein
                       │           │ ja
                       │  ┌─────────────────────┐  ╭─52
                       │  │ alle TMC-Daten       │
                       │  │ lesen                │
                       │  └─────────────────────┘
                       │           │
                       │  ┌─────────────────────┐  ╭─54
                       │  │ auswerten            │
                       │  └─────────────────────┘
                       │           │
                       │  ┌─────────────────────┐  ╭─56
                       │  │ speichern            │
                       │  └─────────────────────┘
                       │           │
                       └───────────┘
```